# EUROPÄISCHE PATENTSCHRIFT

(11) **EP 2 002 236 B1**
(45) Veröffentlichungstag und Bekanntmachung des Hinweises auf die Patenterteilung: **17.04.2013**
(21) Anmeldenummer: 07722122.4
(22) Anmeldetag: 28.03.2007
(51) Int. Cl.: G01N 13/02

(54) **HANDTENSIOMETER MIT AUTOMATISCHER REGELUNG VON BLASENLEBENSDAUER DURCH MESSEN UND REGELN DES GASVOLUMENSTROMS**
HAND-HELD TENSIOMETER FEATURING AUTOMATIC REGULATION OF THE BUBBLE LIFE BY MEASURING AND REGULATING THE GAS VOLUME FLOW
TENSIOMÈTRE MANUEL À RÉGULATION AUTOMATIQUE DE LA DURÉE DE VIE DES BULLES PAR MESURE ET RÉGULATION DU DÉBIT VOLUMÉTRIQUE DU GAZ

(30) Priorität: 04.04.2006 DE 102006017152
(43) Veröffentlichungstag der Anmeldung: 17.12.2008
(73) Patentinhaber: SITA Messtechnik GmbH, 01217 Dresden (DE)
(72) Erfinder: HABERLAND, Ralf, 01257 Dresden (DE)
(74) Vertreter: Kailuweit, Frank
(86) Internationale Anmeldenummer: PCT/DE2007/000564
(87) Internationale Veröffentlichungsnummer: WO 2007/115532

(56) Entgegenhaltungen:
- DE-C1- 19 636 644
- DE-U1- 20 310 173
- DE-U1- 20 318 463
- DE-U1-202004 012 573

## Beschreibung

Die Erfindung betrifft ein Handtensiometer zum Messen der Oberflächenspannung von Flüssigkeiten oder der Stoffkonzentration in einer Flüssigkeit nach einem Blasendruckverfahren mit automatisch geregelter Blasenlebensdauer, aufweisend ein Gehäuse mit mindestens einer daran befestigten Messkapillare sowie gegebenenfalls weiterer Sensoren und enthaltend Bedien- und Anzeigemittel, eine Stromversorgung, eine Gasquelle für die Erzeugung von Blasen an mindestens einer Messkapillare, Mittel zum Einstellen von Blasenlebensdauern, Mittel zum Regeln des in die Messkapillare(n) eingeleiteten Gasvolumenstroms, sowie eine Elektronik/ Prozessoreinheit für die Steuerung aller internen Abläufe und eine Speicherung von Daten.

Die Blasenlebensdauer, welche sich bei bestimmter Oberflächenspannung und Dimensionierung des pneumatischen Systems aus dem durch die Messkapillare geleiteten Gasvolumenstrom ergibt, ist, wie die Temperatur der Probe, ein signifikanter Parameter des Oberflächenspannungsmesswertes. Die Begriffe Blasenlebensdauer und Oberflächenalter werden in der Praxis synonym verwendet und definieren die Zeit vom Minimum bis zum Maximum des Druckes in der Blase. Der Begriff Blasenfrequenz bzw. Blasenrate gibt die Anzahl der aus der Messkapillare austretenden Blasen pro Zeiteinheit an. Sie wird im Zusammenhang mit Blasendrucktensiometern nur noch aus Kompatibilitätsgründen oder bei weniger genauen Messungen verwendet, da das Reziproke der Blasenfrequenz neben der Blasenlebensdauer die sogenannte Totzeit enthält.

### Stand der Technik

Am Markt erhältliche Handtensiometer sind auf Grund ihrer Baugröße im Vergleich zu stationären Labormessgeräten mit einer beschränkten Anzahl funktionsbestimmender Komponenten ausgestattet.

Aus DE 20 2004 012573 U1 ist ein Handtensiometer bekannt, das aus nur einem Gehäuse besteht und auf Grund seiner Ausrüstung mit einer manuellen Einstellmöglichkeit des elektrischen Betriebsstromes der integrierten Luftpumpe befähigt ist, Blasen mit verschiedenen Blasenlebensdauern zu erzeugen. Die eingestellte Blasenlebensdauer bzw. Blasenfrequenz wird jedoch vermittels des Handtensiometers nicht geregelt und variiert daher mit der Zeit innerhalb einer kontinuierlichen Messung durch Drift des Geräteverhaltens, z.B. durch Erwärmung der Pumpe. Ein verlässliches Erreichen eines Sollwertes der Blasenlebensdauer und damit ein erreichbarer Messfehler des Wertes der dynamischen Oberflächenspannung obliegt dem Anwender.

Mit einem Handtensiometer der Anmelderin wurde erstmals in einem handgehaltenen Blasendrucktensiometer mittels automatisch arbeitender Vorrichtungen die Regelung der Blasenlebensdauer nach einem Sollwert realisiert (DE 203 18 463 U1). Dieses Handtensiometer zum Messen der Oberflächenspannung von Flüssigkeiten oder der Stoffkonzentration in einer Flüssigkeit nach einem Blasendruckverfahren mit automatisch geregelter Blasenlebensdauer weist auf ein Gehäuse mit mindestens einer daran befestigten Messkapillare sowie gegebenenfalls weitere Sensoren und enthält Bedien- und Anzeigemittel, eine Stromversorgung, eine Gasquelle für die Erzeugung von Blasen an mindestens einer Messkapillare, Mittel zum Einstellen von Blasenlebensdauern (Blasenfrequenz), sowie eine Elektronik/Prozessoreinheit für die Steuerung aller internen Abläufe und eine Speicherung von Daten, wobei Mittel zum automatischen Regeln der Blasenlebensdauer bzw. Blasenfrequenz oder einer Abfolge veränderlicher Blasenraten nach einem oder mehreren Sollwert(en) vorgesehen sind. Dabei wird der Gasvolumenstrom nicht gemessen und nicht zur Regelung der Blasenlebensdauer (Blasenfrequenz) verwendet. Gleiches gilt für ein Handmessgerät nach DE 20 310 173 U1.

Ferner wird in DE 196 36 644 C1 ein nach einem Blasendruckverfahren arbeitendes Handtensiometer zum Messen der Oberflächenspannung von Flüssigkeiten beschrieben, das einerseits ein Gehäuse mit mindestens einer darin befestigten Messkapillare sowie gegebenenfalls weitere Sensoren aufweist sowie Bedienmittel und Anzeigemittel, eine Stromversorgung, eine Gasquelle für die Erzeugung von Blasen an der Messkapillare, Mittel zum Steuern des in die Messkapillare eingeleiteten Gasvolumenstroms für die Erzeugung des Blasenaustritts mit fester wählbarer Frequenz oder mit automatischem Frequenzdurchlauf, sowie eine Elektronik/Prozessoreinheit für die Steuerung aller internen Abläufe und Speicherung von Daten und das andererseits Messergebnisse wie Blasenfrequenz, Temperatur usw. zusammen mit Datum/Uhrzeit speichert, also einen Datenspeicher aufweist, und in verschiedenen Betriebsmodi, darunter zwei Messmodi, betreibbar ist.

### Kritik am Stand der Technik

Die vorgenannten Handtensiometer sind noch verbesserungswürdig wie auch weitere bekannt gewordene Handtensiometer.

So arbeitet die Regelung des Handtensiometers nach DE 203 18 463 U1 nur in gewissen Grenzen ausreichend schnell, weil lediglich nach jeder abgeschlossenen Blasendetektion ein Eingangswert für die Regelung vorliegt und als Störeinfluss die Bauelemente zur Volumenstromerzeugung einer gewissen Drift unterliegen und nachgestellt werden müssen oder die Oberflächenspannung der Probe veränderlich ist. Daher benötigt es eine längere Zeit, Blasenlebensdauern von > 1s oder sogar mehrere Sollwerte der Blasenlebensdauer oder eine definierte Abfolge von verschiedenen Blasenlebensdauern einzuregeln.

Die Bedienung miniaturisierter Handtensiometer wird mangels ausreichender geeigneter Außenfläche mit nur wenigen Tasten realisiert. Das Abrufen von Messfunktionen ist daher über Menüebenen realisiert, was die Bedienung für Ungeübte unübersichtlich macht. Mehrere vordefinierte Messmodi zur Ausführung ausschließlich mittels eines Handtensiometers sind nicht bekannt.

In Handtensiometern werden Messwerte üblicherweise in einem Speicher abgelegt, der eine Identifizierung der Messung lediglich an Hand des Datums oder der Speicherplatznummer erlaubt. Der Zugriff auf einen solcherart organisierten Speicher ist unübersichtlich und fördert Verwechslungen.

Handtensiometer geben Daten über eine PC-Schnittstelle aus. Die direkte Kommunikation mit externer Peripherie wie Dosiereinrichtungen oder mit einer SPS ist nicht möglich.

Veränderungen der Messstrecke, wie z.B. des Verhaltens der Messkapillare, führen zu einer Dejustierung eines Handtensiometers. Das Verhalten eines Handtensiometers kann ermittelt werden, wenn eine Messung in einer Flüssigkeit mit bekannter Oberflächenspannung durchgeführt wird. Diese Messwerte können gleichfalls für eine Kalibrierung verwendet werden. Eine Justierung ist aber nicht in jedem Fälle angezeigt oder erwünscht. Soll also nur bedarfsweise justiert werden, müssen folglich zwei Messungen ausgeführt werden, die erste zum Ermitteln des Messverhaltens ("Kalibrierung") und die zweite zur eigentliche Justierung. Für zwei solche Vorgänge wird die entsprechende Zeit benötigt.

Weitere Handhabungsnachteile sind in einer kabelgebundenen Kommunikation zu sehen.

Werden mehrere Proben gemessen oder werden z.B. in Fertigungsanlagen mit mehreren Reinigungsbädern mehrere Messstellen aufgesucht und die erhaltenen Messwerte im Gerätespeicher abgelegt, kann trotz der Sortierung nach der Art der Messung dennoch ein Verwechseln der Proben auftreten.

### Aufgabe der Erfindung

Der Erfindung liegt die Aufgabe zugrunde, ein handgeführtes Blasendrucktensiometer zu entwickeln, das, ausgehend vom gattungsgemäßen Handtensiometer nach DE 203 18 463 U1, die aufgeführten Nachteile weitgehend vermeidet. Insbesondere soll eine schnellere Regelung der Blasenlebensdauer nach einem Sollwert erfolgen und eine verbesserte Bedienung und Ablesbarkeit ebenso zur Schnelligkeit einer Messung und zur verbesserten Nutzung der Messdaten beitragen wie ein verwechselungsfreier Zugriff auf interne Speicherinhalte, eine direkte Kommunikation mit externer Peripherie, wie Dosiereinrichtungen oder einer SPS, und eine lediglich bedarfsweise Kalibrierung.

### Lösung der Aufgabe

Die Aufgabe wird erfindungsgemäß durch die Merkmale des Anspruchs 1 gelöst, wobei weitere vorteilhafte Ausgestaltungen der Erfindung bezüglich verbesserter Eigenschaften eines Handtensiometers in den abhängigen Ansprüchen angegeben sind. Der unabhängige Anspruch 12 gibt ferner ein Verfahren zum Messen einer Oberflächenspannung oder einer Stoffkonzentration mit einem Handtensiometer an.

### Ausführungsbeispiel

Anhand eines Ausführungsbeispiels soll die Erfindung mitsamt ihren Vorteilen näher beschrieben werden.

Hierzu zeigt:
- Fig. 1: die Bedienseite eines Handtensiometers zur Messung der Oberflächenspannung oder Stoffkonzentrationen,
- Fig. 2: ein Blockschaltbild des pneumatischen Systems zum Messen des Volumenstroms und
- Fig. 3: Drucksignale in Abhängigkeit der sich bildenden Blase an der Kapillare eines Blasendrucktensiometers.

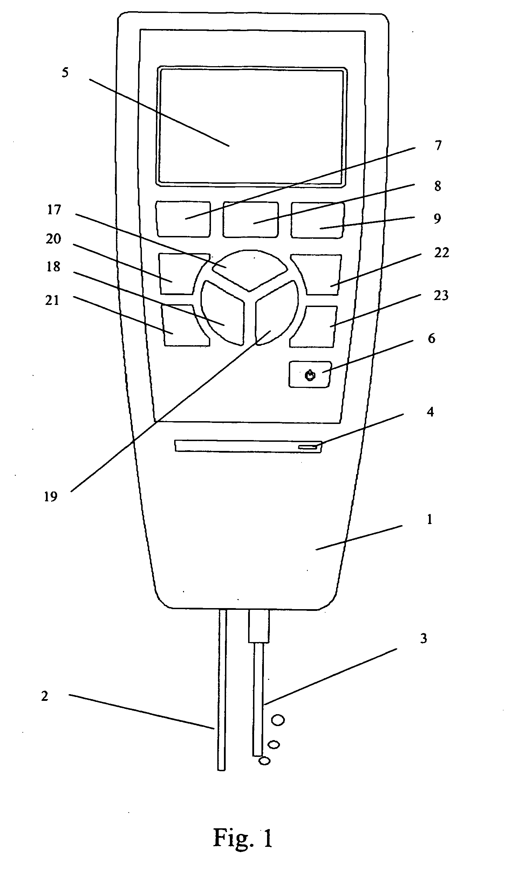

Gemäß Fig. 1 ist die Bedienung eines vollkommen autark benutzbaren Handtensiometers für den Anwender übersichtlich und ohne komplizierte Menüs angelegt, wodurch Messdauer erheblich reduziert werden kann. Hierzu ist vorgesehen, mittels Direktzugriffstasten verschiedene vordefinierte Messabläufe abzurufen. Besonders vorteilhaft für verschiedene Aufgabenstellungen sind z.B. die Messung lediglich eines Messwertes für die Oberflächenspannung einer Messflüssigkeit oder Stoffkonzentration in einer Flüssigkeit, wofür ein Messmodus "Einzelmesswert" über eine entsprechend gekennzeichnete Taste 17 aufgerufen werden kann. Dieser Modus gestattet einen besonders einfachen Vergleich des Messwertes mit einem Sollwert, ggf. mit automatischer Ausgabe der Abweichung. In gleicher Art lässt sich ein Messmodus "Online" zur kontinuierlichen Messung bei einer bestimmten Blasenlebensdauer mit einer weiteren Taste 19 und ein Messmodus "Auto" zur Messung bei einer Abfolge verschiedener Blasenlebensdauern mit einer dritten Taste 18 abrufen.

Zur einfacheren Handhabung sind weiterhin für letztgenannten Messmodus "Auto" Abfolgen verschiedener Stützstellendichte der einzustellenden Blasenlebensdauern im Handtensiometer vordefiniert und können ausgewählt werden. Beispielhaft sind einer Vorgabe ["niedrig"] 10 Messwerte zugeordnet und einer weiteren Vorgabe ["noch"] 50 Messwerte zugeordnet, jeweils bei verschiedenen Blasenlebensdauern.

Um eine Messung der Probentemperatur schon vor dem Beginn einer Oberflächenspannungsmessung ohne umständliches Starten dieser sowie von jedem beliebigen Zustand des Handtensiometers aus zu ermöglichen, ist eine zusätzliche Direktwahltaste 20 ["Temperatur"] zur schnellen Ermittelung eines Temperatur-Messwertes vorgesehen, der von einem am Gehäuse 1 des Handtensiometers angebrachten Temperaturfühler 2 aufgenommen wird.

Mit einer weiteren Taste 21 ["Reinigen"] wird auf Knopfdruck eine Reinigungsprozedur einer am Gehäuse 1 auswechselbar befestigten Messkapillare 3 unter erhöhtem Volumenstrom gestartet.

Die Verwendung einer zusätzlichen optischen Signaleinrichtung, z. B. einer hellen LED-Leuchte 4 oder eines herkömmlichen Leuchtmittels gestattet es, wirksam und schnell auf Betriebszustände des Handtensiometers aufmerksam zu machen.

In einer weiteren Ausgestaltung des Handtensiometers ist ein hinterleuchtetes Display 5 vorgesehen, z.B. mittels sehr flacher und stromsparender EL-Folien.

Um den Messdatenspeicher übersichtlich nutzbar zu gestalten, ist dieser vorteilhaft passend zu den verschiedenen Arten der Messung in wenigstens zwei Bereiche unterteilt. So kann ein Bereich "Einzelmesswert" zur Speicherung von Messungen mit lediglich einem Messwert dienen, ein Bereich "Online" zur Speicherung von Messreihen mit konstant geregelter Blasenlebensdauer sowie ein Bereich "Auto" zur Speicherung von Messungen mit Abfolgen verschiedener Blasenlebensdauern oder Blasenfrequenzen. Sowohl für das Speichern als auch das Auslesen ist dann der bereichsweise Zugriff auf den Speicher möglich.

Für eine direkte Kommunikation des Handtensiometers mit externer Peripherie wie Dosiereinrichtungen, einer SPS oder mit einem Protokolldrucker, ist das Handtensiometer zusätzlich zur PC-Schnittstelle oder auch ohne PC-Schnittstelle mit einer oder mehreren uni- oder bidirektionalen Prozessschnittstellen zu peripheren Geräten ausgestattet, die geeignet sind, auch ohne PC ausschließlich mit dem Handtensiometer gesteuert zu werden, z.B. nicht näher dargestellte Schaltausgänge, Stromschnittstellen, RS232, Profibus o.ä.. Besonders vorteilhaft können die Schnittstellen drahtlos ausgeführt sein. Weiterhin können die Schnittstellen so ausgestattet sein, dass das Handtensiometer aus der Ferne bedienbar ist, z.B. mittels einfacher Kontakte z.B. zum Starten der einzelnen Messmodi. Damit sind z.B. Reinigungsanlagen oder Versuchsstände im Labor mit Handtensiometern einfach zu automatisieren, ohne dass der Anwender den PC in seine Prozesssteuerung einbeziehen muss.

Die Justierung des Handtensiometers wird an Hand einer einzigen Messung einer Flüssigkeit mit bekannter Oberflächenspannung derart ausgeführt, dass zunächst nur die Kalibrierdaten ermittelt und qualitativ, z.B. "Justierung nicht erforderlich", "Justierung erforderlich", oder quantitativ, z.B. "2% Abweichung", "0,5mN/m Abweichung", ausgegeben werden. Zum Starten der Kalibrierung dient gleichfalls die Taste 21 ["Reinigen"], welche dazu ein zweites Mal betätigt wird. Danach können die Kalibrierdaten durch den Anwender beurteilt und durch Auswahl entweder zur Neujustierung des Handtensiometers verwendet oder verworfen werden, womit die bisherige Justierung bestehen bleibt. Die manuelle Auswahl der Verwendung oder des Verwurfs der Kalibrierdaten kann natürlich auch automatisch durch das Handtensiometer nach vordefinierten Vorgaben erfolgen.

Mit der Taste 23 ["Speichern"] kann auf Knopfdruck eine Messung gespeichert werden und mit der Taste 22 ["Auslesen"] kann auf Knopfdruck der Speicherinhalt des Datenspeichers ausgelesen werden.

Außerdem verfügt das Handtensiometer noch über eine EIN/AUS-Taste 6 und drei Tasten 7, 8, 9 unterhalb des Displays 5, deren Funktion softwaremäßig vorgegeben wird.

Um das Handtensiometer für längere Messungen sicher an einem Stativ anzubringen und nicht zeitaufwändig in der Hand halten zu müssen, ist eine nicht näher dargestellte partiell umhüllende Schale mit dem Stativ verstellbar verbunden, in die von oben bis in die Nähe des Schwerpunktes oder diesen erreichend das Handtensiometer eingeführt werden kann und auf Messposition gehalten wird. Diese Schale kann mit Kontakten versehen sein, die einfach durch Einstecken des Handtensiometers in den Halter die Verbindung des Handtensiometers mit Schnittstellen- und Netzadapterkabeln herstellen.

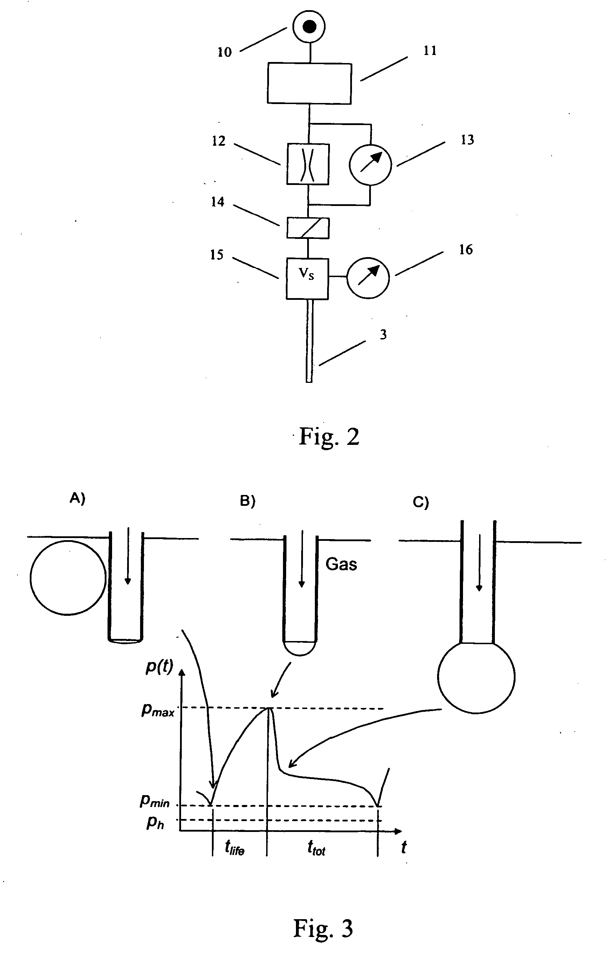

Anhand der Fig. 2 soll die automatische Regelung der Blasenlebensdauer oder eine Abfolge dieser nach einem oder mehreren vorgebbaren oder fest eingestellten Sollwert(en) durch Messen und Einstellen eines Gasvolumenstromes näher erläutert werden.

Das pneumatische System besteht aus einer Gasquelle 10, beispielsweise einer pneumatischen Pumpe, einem Pufferspeicher 11, der konstante Gasdruckverhältnisse schafft, einem Volumenstromdurchflussmesser, beispielsweise bestehend aus einem parallel zu einem pneumatischen Widerstand 12 liegenden Differenzdruckmesser 13, einem Ventil 14, das vom Handtensiometer intern gestellt wird und einer Systemvolumenanordnung aus einer Systemvolumenkammer 15, an die ein Drucksensor oder Differenzdrucksensor 16 zum Messen des Blasendrucks angeschlossen ist, und der mit der Systemvolumenkammer 15 in Verbindung stehenden Messkapillare 3.

Zur Beschleunigung der automatischen Regelung der Blasenlebensdauer ist erfindungsgemäß vorgesehen, eine stetige Führungsgröße für die Regelung der Blasenlebensdauer zu erhalten, unabhängig z.B. vom Druck der Gasquelle 10, der tatsächlichen Einstellung des Ventils 14 oder von der Oberflächenspannung der Flüssigkeit.

Um eine bestimmte Blasenlebensdauer zu erzeugen, muss in das pneumatische System 15, 3 ein bestimmter Gasvolumenstrom eingeleitet werden. Liegt zu mindestens einer Blasenlebensdauer der benötigte Gasvolumenstrom vor, ist es möglich, durch Einleiten eines zur Blasenlebensdauer umgekehrt proportionalen Gasvolumenstroms eine beliebige Blasenlebensdauer hinreichend genau mit wenigen Blasen und damit schnell einzustellen. Wegen der veränderlichen Messbedingungen ist hierzu der Gasvolumenstrom über das Ventil 14 konstant nachzuregeln.

Das erfindungsgemäße Handtensiometer enthält daher in dem Gehäuse 1 einen Sensor 13 zum Messen des Volumenstroms (z.B. in der Art eines Differenzdrucksensors 13 über einem pneumatischen Widerstand 12 oder ausgeführt als handelsüblicher Strömungssensor ohne pneumatischen Widerstand, sowie Mittel zum Regeln dieses Volumenstroms auf einen mit der einzuregelnden Sollblasenlebensdauer korrelierenden vorausberechneten Wert z.B. in Form des softwaremäßig gestellten Ventils 14. Gleichwirkend sind auch eine regelbare Pumpe oder ein gepulst schaltendes Ventil mit anschließender Glättung des Gasvolumenstroms.

Um ein Verwechseln mehrerer Messwerte zu vermeiden, ist es nützlich, mit den Datensätzen bei der Ablage in den Speicher eine Bezeichnung zu speichern, die die Probe oder den Messort der Probe charakterisiert (z.B. Bad1, Bad2, ...). Anhand dieser Information kann der gewünschte Datensatz schneller und sicherer aufgefunden werden. Die Eingabe wird vereinfacht, wenn die Identität durch Transponder oder Barcodeleser automatisch eingegeben wird.

In Fig. 3 ist das Drucksignal bei einer Blasendruckmethode mit den Größen Maximaldruck pₘₐₓ, Minimaldruck pₘᵢₙ, hydrostatischer Druck pₕ, Blasenlebensdauer (=Oberflächenalter) t_{life} und Totzeit tₜₒₜ dargestellt. Zustand A) zeigt die Bildung einer neuen Blase nach dem Abriss einer vorherigen Blase, Zustand B) eine zur Halbkugel ausgebildete Blase und Zustand C) eine kugelförmig aufgeblähte Blase kurz vor dem Blasenabriss. Man erkennt, dass mit einer Auswölbung der Blase an der Messkapillare bis zur Halbkugel der Druck in der Blase und damit im Messsystem auf einen maximalen Wert pₘₐₓ steigt und anschließend mit fortschreitendem Aufblähen bis zum Blasenabriss von der Kapillare wieder auf ein Druckminimum pₘᵢₙ sinkt. Die in der Zeit t_{life} bis zum Erreichen des Druckmaximums pₘₐₓ erfolgende Belegung mit Tensiden bestimmt den Wert des mit der dynamischen Oberflächenspannung korrelierenden Druckmaximums pₘₐₓ. Die verbleibende Zeit eines Blasenbildungszyklus ist die Totzeit tₜₒₜ.

## Patentansprüche

1. Handtensiometer zum Messen der Oberflächenspannung von Flüssigkeiten oder der Stoffkonzentration in einer Flüssigkeit nach einem Blasendruckverfahren mit automatisch geregelter Blasenlebensdauer, aufweisend ein Gehäuse (1) mit mindestens einer daran befestigten Messkapillare sowie gegebenenfalls weiterer Sensoren (2) und enthaltend Bedien- und Anzeigemittel (4-9, 17-23), eine Stromversorgung, eine Gasquelle (10) für die Erzeugung von Blasen an mindestens einer Messkapillare (3), Mittel zum Einstellen von Blasenlebensdauern (14), Mittel zum Regeln des in die Messkapillare(n) eingeleiteten Gasvolumenstroms, sowie eine Elektronik/ Prozessoreinheit für die Steuerung aller internen Abläufe und Mittel zur Speicherung von Daten,
**dadurch gekennzeichnet,**
**dass** die Blasenlebensdauer oder eine Abfolge dieser nach einem oder mehreren vorgebbaren oder fest eingestellten Sollwert(en) durch Messen und Einstellen oder Messen und Regeln des Gasvolumenstromes mit Hilfe eines Sensors (13) zum Messen des Gasvolumenstroms und Mitteln (14) zum Einstellen oder Regeln des Gasvolumenstroms auf einen Wert, der mit einer SollBlasenlebensdauer korreliert, automatisch geregelt wird.

2. Handtensiometer nach Anspruch 1,
**dadurch gekennzeichnet,**
**dass** der Sensor (13) ein über einen pneumatischen Widerstand (12) beaufschlagter Differenzdrucksensor ist.

3. Handtensiometer nach Anspruch 1,
**dadurch gekennzeichnet,**
**dass** die Mittel zum Einstellen oder Regeln des Gasvolumenstroms eine einstellbare Pumpe (10) oder ein einstellbares Ventil (14) sind.

4. Handtensiometer nach Anspruch 1,
**dadurch gekennzeichnet,**
**dass** auf einem Bedienfeld des Handtensiometers mehrere Direktzugriffstasten (17, 19, 18) für verschiedene Messmodi mit jeweils entsprechenden Gasvolumenströmen und damit Blasenlebensdauern angeordnet sind.

5. Handtensiometer nach Anspruch 1,
**dadurch gekennzeichnet,**
**dass** Abfolgen verschiedener Stützstellendichte vordefiniert sind und durch Tasten (7, 8, 9) auswählbar sind.

6. Handtensiometer nach Anspruch 1,
**dadurch gekennzeichnet,**
**dass** das Handtensiometer mit einer oder mehreren Prozessschnittstellen versehen ist, wie Stromschnittstellen zur Messwertausgabe oder elektrischen Kontakten zur Steuerung des Handtensiometers.

7. Handtensiometer nach Anspruch 1,
**dadurch gekennzeichnet,**
**dass** eine automatische Kalibrierung des Handtensiometers befähigt ist, ermittelte Kalibrierdaten selbständig oder durch den Nutzer zu bewerten und gegebenenfalls zu verwerfen.

8. Handtensiometer nach Anspruch 1,
**dadurch gekennzeichnet,**
**dass** die Messwerte drahtlos übertragbar sind.

9. Handtensiometer nach Anspruch 1,
**dadurch gekennzeichnet,**
**dass** der Ort der Messung bzw. die Identität der Probe feststellbar und zum Messwert zugehörig speicherbar ist.

10. Handtensiometer nach Anspruch 4,
**dadurch gekennzeichnet,**
**dass** der Datenspeicher in mehrere einzeln ansprechbare Bereiche unterteilt ist, in denen die verarbeiteten und/oder unverarbeiteten Messwerte nach den verwendeten Messmodi abgelegt sind, wobei die Messmodi
- Messen bei einer vorgebbaren Blasenlebensdauer einer Blase,
- Messen bei einer Abfolge von Blasen gleicher vorgebbarer Blasenlebensdauer oder Blasenfrequenz und
- Messen bei einem automatischen Durchlauf einer Abfolge verschiedener Blasenlebensdauern oder Blasenfrequenzen
enthalten.

## Claims

1. Hand-held tensiometer for measuring the surface tension of fluids or the substance concentration in a fluid
according to a bubble pressure method with automatically regulated bubble lifetime, comprising a casing (1) with at least one measuring capillary attached to it, and if necessary, further sensors (2) and comprising means for operation and display (4-9, 17-23), a power supply, a gas source (10) for generating bubbles on at least one measuring capillary (3), means for adjusting the bubble lifetimes (14), means for regulating the gas volume flow fed into the measuring capillary or capillaries, and an electronic/processing unit for controlling all internal processes, and data storage means,
**characterised in that**
the bubble lifetime, or a sequence of the same, according to one or more customizable or fixed set point(s), is automatically controlled either by measuring and adjusting, or by measuring and regulating, the gas volume flow by means of a sensor (13) for measuring the gas volume flow, and by means (14) for adjusting or regulating the gas volume flow, setting it to a value which correlates with a particular set point for a bubble lifetime.

2. Hand-held tensiometer according to claim 1,
**characterised in that**
the sensor (13) is a differential pressure sensor pressurized via a pneumatic resistance (12).

3. Hand-held tensiometer according to claim 1,
**characterised in that**
the means for adjusting or regulating the gas volume flow consist of an adjustable pump (10) or an adjustable valve (14).

4. Hand-held tensiometer according to claim 1,
**characterised in that**
several direct access buttons (17, 18, 19) for different measuring modes with their respective gas volume flows and therefore with their respective bubble lifetimes are arranged on a control panel of the hand-held tensiometer.

5. Hand-held tensiometer according to claim 1,
**characterised in that**
sequences having various densities of sampling points are predefined and may be selected via buttons (7, 8, 9).

6. Hand-held tensiometer according to claim 1,
**characterised in that**
the hand-held tensiometer is equipped with one or more process interfaces, such as current interfaces to output the measuring values, or electrical contacts to control the hand-held tensiometer.

7. Hand-held tensiometer according to claim 1,
**characterised in that**
an automatic calibration of the hand-held tensiometer may evaluate the obtained calibration data on its own, or according to user input, and may discard the data if necessary.

8. Hand-held tensiometer according to claim 1,
**characterised in that**
the measuring values may be transmitted wirelessly.

9. Hand-held tensiometer according to claim 1,
**characterised in that**
the location of measurement, respectively the identity of the sample, may be verified and saved in conjunction with the corresponding measuring value.

10. Hand-held tensiometer according to claim 4,
**characterised in that**
the data storage device is separated into several areas which may be accessed separately, and in which the processed and/or unprocessed measuring values are stored according to the measuring modes used, whereby these measuring modes include
- measuring regarding a customized bubble lifetime of a bubble,
- measuring regarding a bubble sequence of the same customized bubble lifetime or bubble rate
- measuring regarding an automatic cycle of a sequence of various bubble lifetimes or bubble rates.

## Revendications

1. Tensiomètre à main pour mesurer la tension superficielle de liquides ou la concentration de matières dans un liquide selon un procédé de pression de bulle avec régulation automatique de la durée de vie des bulles, comprenant un boîtier (1) sur lequel est fixé au moins un capillaire de mesure et éventuellement d'autres capteurs (2), et comprenant des moyens de commande et d'affichage (4-9, 17-23), une alimentation électrique, une source de gaz (10) pour générer des bulles sur au moins un capillaire de mesure (3), des moyens (14) pour régler des durées de vie des bulles, des moyens pour régler le débit volumétrique du gaz introduit dans le ou les capillaires de mesure, ainsi qu'une unité électronique/ à processeur pour commander tous les déroulements internes et des moyens de mémorisation de données,
**caractérisé en ce que** la durée de vie des bulles ou une succession de durées de vie est régulée automatiquement selon une ou plusieurs valeurs de consigne prédéfinissables ou fixement réglées, par mesure et réglage ou par mesure et régulation du débit volumétrique de gaz, à l'aide d'un capteur (13) pour mesurer le débit volumique de gaz et des moyens (14) pour régler ou réguler le débit volumique de gaz, à une valeur qui est corrélée à une durée de vie des bulles de consigne.

2. Tensiomètre à main selon la revendication 1, **caractérisé en ce que** le capteur (13) est un capteur de pression différentielle sollicité au moyen d'une résistance pneumatique (12).

3. Tensiomètre à main selon la revendication 1, **caractérisé en ce que** les moyens pour régler ou réguler le débit volumique de gaz sont une pompe réglable (10) ou un distributeur réglable (14).

4. Tensiomètre à main selon la revendication 1, **caractérisé en ce que** plusieurs touches d'accès direct (17, 19, 18) pour différents modes de mesure avec des débits volumiques de gaz et donc des durées de vie de bulles chaque fois correspondant(e)s sont disposées sur un panneau de commande du tensiomètre à main.

5. Tensiomètre à main selon la revendication 1, **caractérisé en ce que** des successions de différentes densités ponctuelles sont prédéfinies et sélectionnables par des touches (7, 8, 9).

6. Tensiomètre à main selon la revendication 1, **caractérisé en ce que** le tensiomètre à main est pourvu d'une ou plusieurs interfaces de processus, comme des interfaces électriques pour l'édition de valeurs de mesure ou des contacts électriques pour la commande du tensiomètre à main.

7. Tensiomètre à main selon la revendication 1, **caractérisé en ce qu'**un étalonnage automatique du tensiomètre à main est rendu apte à évaluer de manière autonome ou par l'utilisateur les données d'étalonnage relevées, et le cas échéant à les rejeter.

8. Tensiomètre à main selon la revendication 1, **caractérisé en ce que** les valeurs de mesure peuvent être transmises sans fil.

9. Tensiomètre à main selon la revendication 1, **caractérisé en ce que** le lieu de la mesure ou l'identité de l'échantillon peut être déterminé, et mémorisé en association avec la valeur de mesure.

10. Tensiomètre à main selon la revendication 4, **caractérisé en ce que** la mémoire de données est subdivisée en plusieurs zones individuellement accessibles, dans lesquelles les valeurs de mesure traitées et/ou non traitées sont déposées en fonction des modes de mesure utilisés, sachant que les modes de mesure comprennent
- la mesure avec une durée de vie prédéfinissable d'une bulle,
- la mesure avec une succession de bulles de même durée de vie ou fréquence prédéfinissable, et
- la mesure avec le passage automatique par une succession de différentes durées de vie ou fréquences de bulles.
